# EUROPÄISCHE PATENTSCHRIFT

(11) **EP 1 457 706 B1**
(45) Veröffentlichungstag und Bekanntmachung des Hinweises auf die Patenterteilung: **05.11.2008**
(21) Anmeldenummer: 04003094.2
(22) Anmeldetag: 12.02.2004
(51) Int. Cl.: F16F 13/14, F16F 1/38, B61F 5/30

(54) **Achslenkerlager**
Pivot bearing
Palier pour guide d'essieu

(30) Priorität: 10.03.2003 DE 10310634
(43) Veröffentlichungstag der Anmeldung: 15.09.2004
(73) Patentinhaber: Carl Freudenberg KG, 69469 Weinheim (DE); Schwab Schwingungstechnik AG, 8134 Adliswil (CH)
(72) Erfinder: Marzillier, Wolfgang, 13055 Berlin (DE); Gürtler, Daniel, 12057 Berlin (DE); Biber, Rolf, 8050 Zürich (CH); Schwab, Peter, 8134 Adliswil (CH)

(56) Entgegenhaltungen:
- EP-A- 0 360 783
- EP-A- 1 228 937
- DE-A- 3 831 644
- DE-A- 19 618 688
- FR-A- 2 747 166
- US-A- 4 899 997
- US-A- 4 964 623
- US-A- 5 199 691

## Beschreibung

### Technisches Gebiet

Die Erfindung betrifft ein Achslenkerlager als Bauteil eines Laufwerks für Schienenfahrzeuge, umfassend einen Lenkerbolzen und wenigstens ein Federelement, das zwischen dem Lenkerbolzen und dem Lenkerauge des Achslenkers angeordnet ist, wobei das Federelement eine hydraulische Buchse umfasst, die ein äußeres und ein inneres Gehäuse aufweist, welche einander in radialem Abstand umschließen, um einen Ringspalt zu bilden, wobei in dem Ringspalt ein gummielastisches Element vorgesehen ist, welches wenigstens zwei diametral einander gegenüberliegende Kammern zumindest teilweise begrenzt, die mit einem hydraulischen Fluid gefüllt sind und über eine Überlaufkanal miteinander verbunden sind. Die Erfindung betrifft weiterhin ein Laufwerk für Schienenfahrzeuge mit einem solchen Achslenkerlager.

### Stand der Technik

Achslenker sind weit verbreitete Bauelemente für die Führung von Eisenbahnachsen, insbesonder Lokomotivachsen. Die Lenker sind einerseits am entsprechenden Achslager und andererseits am Drehgestell oder direkt am Eisenbahn- oder Lokomotivrahmen mit Hilfe der sogenannten Lenkerbolzen befestigt. Hierzu weisen die Achslenker ein sogenanntes Lenkerauge auf, das den Lenkerbolzen umschließt. Es ist bekannt, zwischen dem Lenkerbolzen und dem Achslenker ein Federungslelement anzuordnen. Hierbei kommen überwiegend Gummibuchsen zur Anwendung, die zwischen dem Lenkerbolzen und dem Lenkerauge angeordnet sind. Diese Gummibuchsen zeichnen sich durch eine in Fahrtrichtung sehr hohe Steifigkeit aus, was für die Übertragung der hohen Zugkräfte auch gefordert werden muß. Andererseits ist bekannt, dass bei modernen Hochgeschwindigkeitslaufwerken in bestimmten Fahrsituationen, speziell bei Bogenfahrt, eine besonders geringe Steifigkeit in Fahrtrichtung gefordert ist, damit sich der Radsatz im Bogen einstellen kann. Diesen Anforderungen werden die bekannten Gummibuchsen nicht gerecht.

Ein Achslenkerlager der gattungsgemäßen Art ist aus der EP-A-1 228 937 bekannt. In der EP-A-1 228 937 wird eine Vorrichtung für die Führung der Achsen des Drehgestells eines Schienenfahrzeugs beschrieben, welche ein elastisch-hydraulisches Antriebsgelenk zum Einstellen der Steifigkeit des Drehgestells an die Fahrsituation umfasst. Das elastisch-hydraulische Antriebsgelenk arbeitet nach dem Prinzip eines Hydraulikzylinders. Hierzu weist es eine zylinderförmige Fluidbuchse auf, die einen Elastomerkörper und zwei mit einer Hydraulikflüssigkeit gefüllte Hohlräume umfasst. Die Fluidbuchse umgibt eine mit dem Drehgestellrahmen verbundene zentrale Welle. Die Hohlräume werden jeweils über eine Leitung von einer äußeren Verteilerquelle her mit Fluid beaufschlagt in der Weise, dass die Welle in Längsrichtung x der Fahrt zu einer Seite oder zur gegenüberliegenden Seite der Fluidbuchse verschoben wird. Zwischen den Hohlräumen befindet sich eine Zwischenleitung mit einem vorgegebenen Querschnitt für die gesteuerte Übertragung der Flüssigkeit von einem Hohlraum in den anderen. Der gesteuerte Durchfluss der Flüssigkeit von einem zum anderen Hohlraum über die Zwischenleitung erfolgt in der Weise, dass eine eine Bewegung in Längsrichtung x des Drehgestells abdämpfende Wirkung hervorgerufen und eine Anpassung der Steifigkeitswerte der Federung des Drehgestells in beiden Durchfahrsituationen des Fahrzeugs auf gerader Strecke und in Kurven in Funktion von der Erregungsfrequenz erzielt wird.

Nachteilig an dem bekannten Achslenkerlager ist der komplexe Aufbau, der nicht zuletzt darin begründet ist, dass die Bauteile der HydraulikzylinderSteuerung durch die hohen mechanischen Belastungen am Einbauort besonders geschützt werden müssen.

### Darstellung der Erfindung

Aufgabe der Erfindung ist, ein Achslenkerlager der gattungsgemäßen Art so weiter zu entwickeln, dass mit möglichst einfachen Mitteln, die Dämpfungsfunktion gewährleistet und gleichzeitig die Betriebssicherheit auch unter den harschen äußeren Bedingungen am Einbauort des Achlenkerlagers zuverlässig gewährleistet ist.

Diese Aufgabe wird gelöst mit einem hydraulischen Achslenkerlager mit allen Merkmalen des Patentanspruchs 1. Vorteilhafte Ausgestaltungen der Erfindung sind in den Unteransprüchen beschrieben.

Erfindungsgemäß ist bei einem Achslenkerlager, welches als Bestandteil eines Laufwerks eines Schienenfahrzeugs eingesetzt wird und welches einen Lenkerbolzen und wenigstens ein Ferderelement, das zwischen dem Lenkerbolzen und dem Lenkerauge des Achslenkers angeordnet ist, umfasst, wobei das Federelement eine hydraulische Buchse umfasst, die ein äußeres und ein inneres Gehäuse aufweist, welche einander in radialem Abstand umschließen, um einen Ringspalt zu bilden, wobei in dem Ringspalt ein gummielastisches Element vorgesehen ist, welches wenigstens zwei diametral einander gegenüberliegende Kammern zumindest teilweise begrenzt, die mit einem hydraulischen Fluid gefüllt sind und über einen Überlaufkanal miteinander verbunden sind, vorgesehen, dass der Überlaufkanal als passiver Schwingungstilger ohne externe Steuerung des Fluidstroms ausgebildet ist.

Das erfindungsgemäße Achslenkerlager hat einerseits den Vorteil, dass im Vergleich zur Verwendung der ebenfalls bekannten herkömmlichen Gummibuchse neben der Wahl eines geeigneten gummielastischen Materials wesentlich mehr Einstellparameter zur Verwirklichung einer gewünschten Steifigkeits- bzw. Dämpfungscharakteristik des Lagers zur Verfügung stehen. So stehen als weitere Parameter noch die Geometrie und Anordnung des gummielastischen Elementes, der Hydraulikkammern und insbesondere des Überlaufkanals zur Verfügung.

Gemäß der Erfindung ist der Überlaufkanal als Schwingungstilger ausgebildet. Die vorliegende Erfindung macht sich dabei den beispielsweise aus dem Gebiet der Hydrolager bekannten Effekt zunutze, dass eine Flüssigkeitssäule in einem Kanal, der zwei Kammern mit gummielastischen Wänden begrenzt, ein schwingungsfähiges System mit bestimmten Eigenfrequenzen darstellt. Schwingt diese Flüssigkeitssäule im Gegentakt zu einer von aussen aufgezwungenen Schwingung, so wirkt sie als Tilger. Hierdurch lässt sich nicht nur eine deutlich höhere Dämpfung erzielen, als sie alleine durch eine Verengung des Strömungsquerschnitts erzielbar wäre. Der maßgebliche Vorteil besteht darin, dass alleine durch eine entsprechende konstruktive Ausgestaltung des Dämpfungskanals ein Steifigkeitsverlauf eingestellt werden kann, der sowohl zu einem verringerten Rad-Schienenverschleiß als auch zu einer erhöhten Fahrsicherheit bei hohen Geschwindigkeiten führt. So ist beipielsweise bei langsamen Verformungen, d. h. niedrigen Frequenzen der anregenden Schwingung, so wie sie zum Beispiel bei Kurvenfahrten auftreten, eine geringe Steifigkeit gewünscht. Bei hohen Geschwindigkeiten und damit hohen Frequenzen führt die Weichheit zu Stabilitätsproblemen, so dass in diesem Bereich ein hartes Lager gewünscht ist. Der Übergang von niedriger zu hoher Steifigkeit sollte bei Überschreiten einer sogenannten Schaltfrequenz möglichst steil erfolgen. Mit Hilfe der erfindungsgemäßen Buchse lässt sich ein solcher Steifigkeitsverlauf der Buchse alleine über die Kanalgestaltung einstellen, ohne dass es hierzu einer entsprechenden Schalt- oder Verstellvorrichtung bedarf.

Damit wird insbesondere gegenüber der bekannten Hydraulikzylindersteuerung die Zahl möglicher Fehlerquellen deutlich reduziert und die Betriebssicherheit erhöht.

Da es sich bei der Schwingungstilgung mittels schwingender Flüssigkeitssäulen um eine auf dem vorliegenden Anwendungsgebiet zwar bislang noch nicht eingesetzte, aber gleichwohl an sich bekannte Technik handelt, ist dem Fachmann das Auffinden geeigneter Parameter zur Erzielung einer gewünschten Dämpfungscharakteristik leicht möglich. So ist es bekannt, dass die Dämpfungscharakteristik, d. h. die Lage des Dämpfungsmaximums, die Breite des Dämpfungsbereichs und insbesondere die Steilheit des Steifigkeitsübergangs, in einfacher Weise über die Kanallänge, die Größe und die Geometrie der Querschnittsfläche des Dämpfungskanals sowie über die Viskosität des hydraulischen Fluids beeinflußbar ist. Die Einstellung der obigen Parameter hängt vom jeweiligen Anwendungsfall ab, d. h. davon, welche Dämpfungscharakteristik speziell gewünscht ist.

Es hat sich gezeigt, dass sich der gewünschte Tilgereffekt am einfachsten durch Verlängerung des Überlaufkanals unter Beibehaltung der ansonsten üblichen Buchsengeometrien verwirklichen lässt. Dies hat den großen Vorteil, dass eine erfindungsgemäße Buchse in übliche Bauräume eingesetzt werden kann. Eine spezielle Anpassung an die erfindungsgemäße Buchse ist nicht nötig.

Eine deutliche Erhöhung der Steifigkeit bei hohen Frequenzen und ein steiler Steifigkeitsverlauf im Bereich der Schaltfrequenz lässt sich mit Kanallängen erreichen, die ein Mehrfaches des Buchsendurchmessers betragen. Große Kanallängen lassen sich am einfachsten dadurch realisieren, dass Überlaufkanal im wesentlichen wendel-, spiral- und/oder mäanderförmig ausgebildet wird. Vorteilhafterweise wird er dabei am Aussen- und/oder Innenumfang der Buchse und/oder eines Gehäuseteils der Buchse entlanggeführt. Die Forderung nach Beibehaltung des üblichen Bauraums lässt sich auf diese Weise besonders einfach realisieren.

In einer besonders bevorzugten Ausführungsform der Erfindung wird der Überlaufkanal durch die Innenwandung des inneren Gehäuseteils und eine am Aussenumfang des von der Buchse umschlossenen bolzenförmigen Elements umlaufende Nut begrenzt. Diese Ausführungsform lässt sich besonders einfach herstellen.

Weiterhin kann im Überlaufkanal eine in ihrem durchströmten Querschnitt verstellbare Drossel zur Beeinflussung der Steifigkeits- und Dämpfungscharakteristik des Achslenkerlagers vorgesehen sein, wobei bei dieser Variante der Überströmkanal nicht zwingend als Schwingungstilger ausgebildet sein muss. Eine solche Drossel ist jedoch weniger bevorzugt, da durch die dafür benötigte Verstelleinrichtung, die auch noch mit Hilfsenergie versorgbar sein muss, die Fehleranfälligkeit des Gesamtsystems, das im Fahrbetrieb größten mechanischen Belastungen ausgesetzt ist, stark heraufgesetzt wird. Ein Ausfall der Verstelleinrichtung bzw. der Hilfsenergieversorgung würde durch die ggf. an die Fahrsituation nicht mehr angepasste Steifigkeit des Lagers die Betriebssicherheit des Schienenfahrzeugs erheblich beeinträchtigen.

In einer weiteren besonders bevorzugten Ausführungsform der Erfindung ist das Achslenkerlager mit einer Leckageüberwachungs- und -anzeigevorrichtung ausgestattet. Da das erfindungsgemäße Achslenkerlager im Fahrbetrieb, wie bereits oben erwähnt, größten mechanischen Belastungen ausgesetzt ist, kann eine Beschädigung der hydraulischen Buchse verbunden mit einer Leckage und Verlust von Dämpfungsflüssigkeit nicht ausgeschlossen werden. Bei Verlust von hydraulischem Fluid kann aber die Funktion der Buchse, d. h. die Verhärtung des Lagers bei hohen Frequenzen und damit hohen Geschwindigkeiten, verloren gehen mit der Folge, dass die Stabilität des Fahrzeugs gefährdet ist. Dies ist insbesondere auch darauf zurückzuführen, dass bei Verlust des Dämpfungsfluids auch die Funktion der Blähfeder nicht mehr zum Tragen kommt. Die Steifigkeits- und Dämpfungseigenschaften werden in einem solchen Schadensfall alleine durch die Tragfeder bestimmt, deren Steifigkeit alleine nicht ausreicht. In Verbindung mit der erfindungsgemäß vorgesehenen Leckageüberwachungs- und -anzeigevorrichtung ist solcher Ausfall jedoch weitgehend unkritisch, da er sofort detektiert und zur Anzeige gebracht wird. Es können sofort die erforderlichen Folgehandlungen, wie zum Beispiel Beheben der Leckage und Neubefüllung mit Dämpfungsfluid oder Austausch der Buchse vorgenommen werden.

Leckageüberwachungs- und Anzeigevorrichtung für hydraulische Systeme sind an sich bekannt. In der Regel detektieren sie den Druck in der Kammer mit dem hydraulischen Fluid und zeigen einen leckagebedingten Druckverlust über entsprechende Anzeigevorrichtungen an. So kann erfindungsgemäß beispielsweise ein an sich bekannter Druckaufnehmer vorgesehen sein, der die vollständige Befüllung mit hydraulischem Fluid anzeigt. Bei Verlust von Fluid wird konstruktionsbedingt der Systemdruck verringert und in Folge davon der Anzeigewert des Druckaufnehmers.

In einer bevorzugten Ausführungsform der Erfindung umfasst die Drucküberwachungs- und Anzeigevorrichtung nach Art eines hydraulischen Zylinders eine hydraulische Kammer mit einem Kolben und einem Anzeigestössel an dem Kolben, wobei die hydraulische Kammer mit dem Fluidsystem der hydraulischen Buchse in Wirkverbindung steht. Diese Anordnung ist zweckmäßigerweise an der Buchse so angeordnet, dass der Anzeigestössel für das Kontrollpersonal von aussen leicht einzusehen ist. Da die Fluidkammer der hydraulischen Leckageüberwachungs- und-anzeigevorrichtung in direktem hydraulischen Kontakt zu den Fluidkammern bzw. zum Überlaufkanal der Buchse stehen, nimmt der Anzeigestössel im Normalbetrieb eine definierte Position ein. Ändert sich der Systemdruck in der Buchse, so ändert sich über die hydraulische Verbindung auch der Druck in der Fluidkammer der der Leckageüberwachungs- und -anzeigevorrichtung mit der Folge, dass sich die Position des Anzeigestössels verändert. Für eine Kontrollperson ist diese Änderung eindeutig feststellbar und gibt Anlass zu den oben beschriebenen weiteren Handlungen. Die beschriebene Einrichtung stellt eine zuverlässige und einfach zu handhabende Kontrollmöglichkeit für den ordnungsgemäßen Betrieb des Achslenkerlagers dar. Gegenüber elektronisch gesteuerten Überwachungs- und Anzeigesystemen hat sie den Vorteil, dass sie aufgrund des einfachen Aufbaus und der direkten hydraulischen Anbindung an das zu detektierende System nur in sehr geringem Maße fehleranfällig ist.

In einer weiteren bevorzugten Ausführungsform der Erfindung ist die hydraulische Kammer mit Kolben und Anzeigestössel in den Lenkerbolzen integriert, derart, dass der Anzeigestössel mit seinem äußeren Ende in Abhängigkeit vom Funktionszustand der Buchse in einem definierten Abstand über die stimseitige Endfläche des Lenkerbolzens hinausragt. Dies hat den Vorteil, dass kein zusätzlicher Bauraum für die Leckageüberwachungs- und Anzeigevorrichtung benötigt wird und dass darüber hinaus die geforderte leichte Einsehbarkeit der Position des Anzeigestössels von aussen gewährleistet ist.

### Kurzbeschreibung der Zeichnungen

Nachfolgend wird die Erfindung anhand der Figuren näher erläutert.

Es zeigen:
- Figur 1:: ein erfindungsgemäßes Achslenkerlager mit einer hydraulischen Buchse in einer schematischen Längsschnitt-Darstellung;
- Figur 2:: das Achslenkerlager aus Fig. 1 in einer schematischen Querschnittsdarstellung;
- Figur 3:: in einer schematischen Längsschnittdarstellung die Einbausituation eines Achslenkerlagers mit einer erfindungsgemäßen Buchse;
- Figur 4:: die Einflußnahme auf den Steifigkeits- und Dämpfungsverlaufs eines erfindungsgemäßen Achslenkerlagers mit einer hydraulischen Buchse durch Variation der Kanallänge des Überlaufkanals;
- Figur 5:: das erfindungsgemäße Achslenkerlager gemäß Fig. 1 mit einer ersten bevorzugten Ausführungsform für eine Leckageüberwachungs-und -anzeigevorrichtung;
- Figur 6:: das erfindungsgemäße Achslenkerlager gemäß Fig. 1 mit einer zweiten bevorzugten Ausführungsform für eine Leckageüberwachungs- und -anzeigevorrichtung;
- Figur 7:: das erfindungsgemäße Achslenkerlager gemäß Fig. 1 mit einer dritten bevorzugten Ausführungsform für eine Leckageüberwachungs-und -anzeigevorrichtung;

### Ausführung der Erfindung

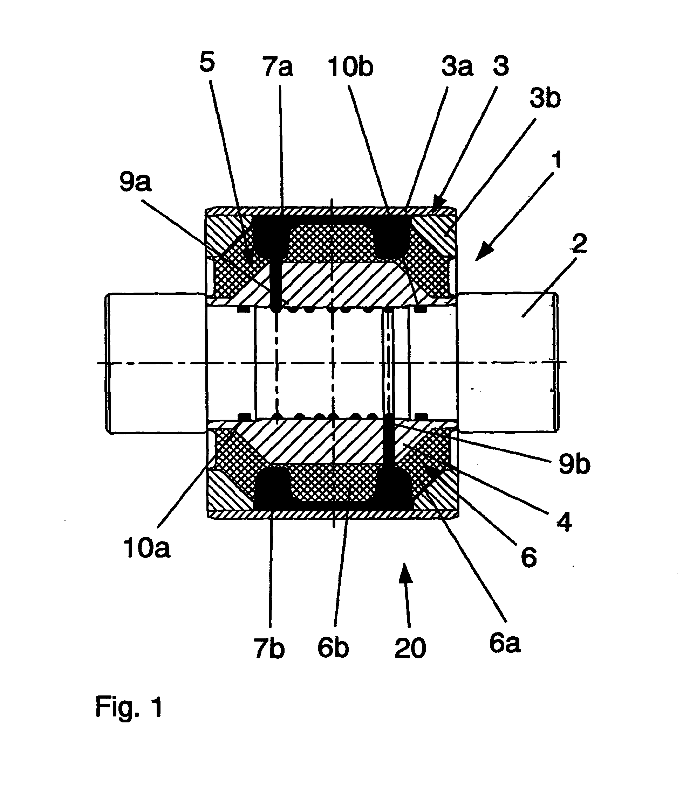

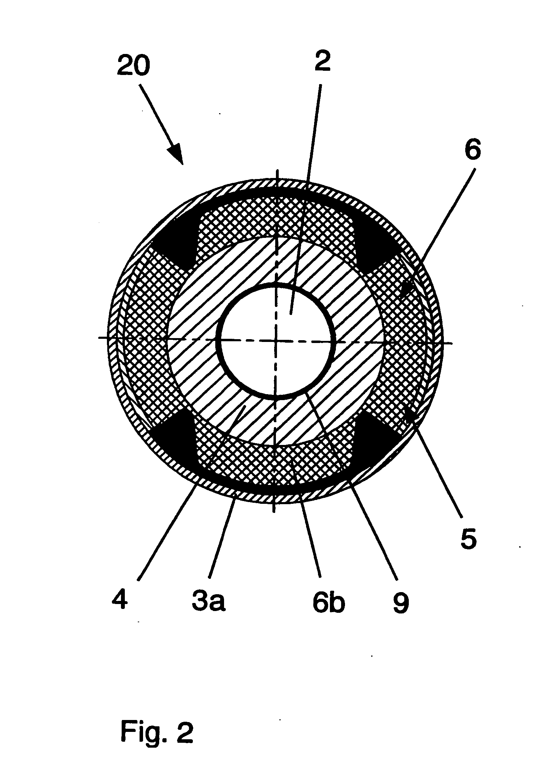

Man erkennt in den Figuren 1 und 2 ein erfindungsgemäßes Achslenkerlager 20 mit einer hydraulischen Buchse 1 als Federelement, die den sogenannten Lenkerbolzen 2 umschließt. Die Buchse 1 umfasst ein äußeres und ein inneres Gehäuseteil 3 bzw. 4, wobei das äußere Gehäuseteil 3 in der Figur ohne Beschränkung der Allgemeinheit durch eine Hülse 3a und einen Stützring 3b gebildet wird. Das äußere und das innere Gehäuseteil 3 bzw. 4 umschließen einander in radialem Abstand, um so einen Ringspalt 5 zu bilden, in dem ein gummielastisches Element 6 angeordnet ist. Das gummielastische Element 6 ist in der Figur ohne Beschränkung der Allgemeinheit in 3 Segmente unterteilt, wobei die stirnseitig angeordneten Segmente 6a die Blähfeder und die Segmente 6b Anschlagelemente bilden. Die die Tragfeder bildenden Segmente sind bei der Schnittdarstellung in Figur 1 nicht erkennbar.

Das gummielastische Element 6 begrenzt radial nach innen hin zwei in Fahrtrichtung diametral einander gegenüberliegende Kammern 7a, 7b, die mit einem hydraulischen Fluid gefüllt sind. Die äußere Begrenzung wird ohne Beschränkung der Allgemeinheit durch die Innenwandung des äußeren Gehäuseteils 3 gebildet. Die Kammern 7a, 7b könnten altemativ auch vollständig von dem gummielastischen Element 6 begrenzt werden.

Die Steifigkeitscharakteristik des Lagers 20 wird u. a. entscheidend durch die Geometrie des gummielastischen Elements 6 sowie die geometrische Ausbildung der Kammern 7a, 7b beeinflußt, wobei das Auffinden einer geeigneten geometrischen Ausbildung zur Erzielung einer gewünschten Einflußnahme auf den Steifigkeitsverlauf, wie bereits oben beschrieben ist, im Bereich des Fachwissens des Durchschnittsfachmanns liegt.

Die Gehäuseteile 3a, 3b und 4 bestehen vorzugsweise aus Stahl, das gummielastische Element 6 vorzugsweise aus einem einvulkanisierten Elastomer, beispielsweise aus Naturkautschuk.

Die Kammern 7a und 7b sind über einen Kanal 9 hydraulisch miteinander verbunden. Der Kanal 9 ist gemäß der Erfindung als Schwingungstilger ausgebildet und wird in seinem mittleren Bereich durch eine wendelförmig am Aussenumfang des Lenkerbolzens 2 umlaufende Nut und die Innenwandung des inneren Gehäuseteils 4 begrenzt. Am oberen und unteren Ende der Wendel setzt sich der Kanal 9 jeweils in im Wesentlichen horizontal durch die Wandung des innere Gehäuseteils 4 geführte Kanalelemente 9a, 9b fort, die zur Herstellung der hydraulischen Verbindung in die jeweils zugeordnete Kammer 7a bzw. 7b münden. Das Verhältnis zwischen Kanalquerschnitt und Kanallänge ist so gewählt, dass der Tilger im Übergangsbereich der Steifigkeit auf betriebsbedingte Schwingungen anspricht. Die Flüssigkeitssäule schwingt dabei im Gegentakt zu der von aussen aufgezwungenen Schwingung und wirkt als Tilger.

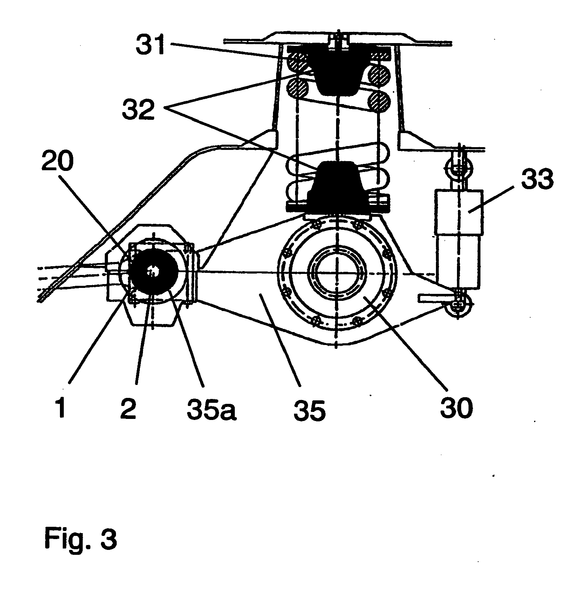

Fig. 3 zeigt die Einbausituation eines erfindungsgemäßen Achslenkerlagers 20 mit einer hydraulischen Buchse 1 in einem Laufwerk für Schienenfahrzeuge. Man erkennt in der Figur ein Radsatzlagergehäuse 30, über dem eine Primärfeder 31 mit Anschlägen 32 angeordnet ist. Man erkennt weiterhin einen Stoßdämpfer 33. Das Radsatzlagergehäuse 30 ist über einen Achslenker 35 und das Achslenkerlager 20 mit dem Fahrgestell beispielsweise eines Scheinenfahrzeugs verbunden. Das Achslenkerlager umfasst den Lenkerbolzen 2, der von dem Lenkerauge 35a des Achslenkers 35 umschlossen ist. Zwischen dem Lenkerbolzen und dem Lenkerauge 35a befindet sich als Federelement die erfindungsgemäße Buchse 1. Das Achslenkerlager 20 hat die Aufgabe, Längskräfte (Fahrtrichtung und Richtung der Hydraulik) und Querkräfte sowie die Torsionsbewegungen bei der Einfederung der Primärfeder und die Kardanik zu übertragen.

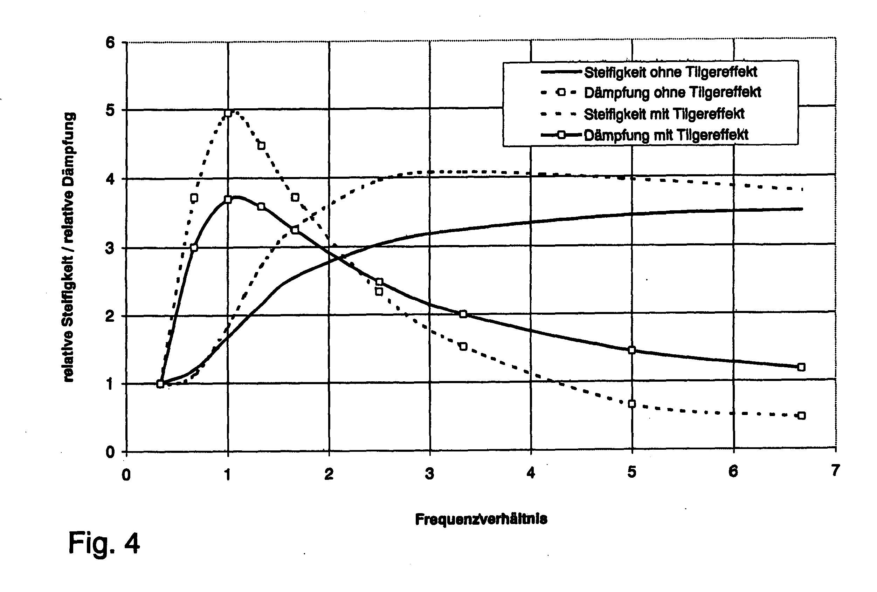

Fig. 4 zeigt als Beispiel für eine mögliche Beeinflussung der Lagercharakteristik eines Achslenkerlagers mit einer hydraulischen Buchse mittels eines als Schwingungstilgers ausgebildeten Verbindungskanals den Steifigkeitsverlauf in Abhängigkeit von der Frequenz für zwei unterschiedliche Kanallängen. Dargestellt sind jeweils die relative, d. h. auf die statischen Werte bezogene Dämpfung und Steifigkeit als Funktion der relativen, auf das Dämpfungsmaximum bezogenen Frequenz. Die Messwerte wurden an Modellbuchsen gewonnen. Das Verhältnis von Kanallänge zu Kanalquerschnitt der Buchse ohne Tilger betrug 40:1, das entsprechende Verhältnis der Buchse mit Tilger 400:1. Die größere Kanallänge wurde durch eine am Aussenumfang des Bolzens wendelartig umlaufende Nut realisiert. Als hydraulisches Fluid wurde ein Glykol-Wasser-Gemisch verwendet.

Man erkennt in der Figur, dass bei beiden Kurven bei niedrigen Frequenzen die Steifigkeit gering ist, während die Dämpfung ein Maximum erreicht. Erwartungsgemäß ist das Maximum bei größerem Verhältnis von Kanallänge zu Kanalquerschnitt deutlich höher. Beide Lager sind weich, die Flüssigkeitssäulen schwingen im Gegentakt zur anregenden Schwingung, die Dämpfung ist groß. Mit zunehmender Frequenz findet bei beiden Lagern ein Übergang von niedriger zu hoher Steifigkeit statt, wobei der Übergang bei der Buchse mit ausgeprägterem Tilger deutlich steiler erfolgt. Beide erfindungsgemäßen Lager schalten somit bei Erreichen einer durch die Buchsengeometrie vorgegebenen Schaltfrequenz, so wie für den Anwendungsfall Schienenfahrzeug gewünscht, selbsttätig, d. h. und ohne jeglichen Schalt- oder Verstellmechanismus auf eine höhere Steifigkeit um, wobei die Schaltfrequenz bei der Buchse mit ausgeprägterem Tilger deutlich schärfer definiert ist.

Das beschriebene Verhalten ist darauf zurückzuführen, dass mit Erhöhung der Anregungsfrequenz die Flüssigkeitssäule in dem Kanal der anregenden Schwingung zunehmend nicht mehr folgen kann, der Flüssigkeitsübertritt von einer Kammer in die andere ist praktisch unterbunden. Hieraus resultiert ein Druckaufbau in den Kammern, die Trag- und die Blähfeder kommen mit ihren Steifigkeiten zum Tragen, die Steifigkeit läuft auf einen maximalen Grenzwert zu, der durch die Summe der Steifigkeiten der Trag- und der Blähfeder bestimmt wird.

Die Schaltfrequenz liegt vorzugsweise zwischen 0,1 bis 1 Hz, was sich beispielsweise über die Kanalgeometrie ohne weiteres einstellen lässt.

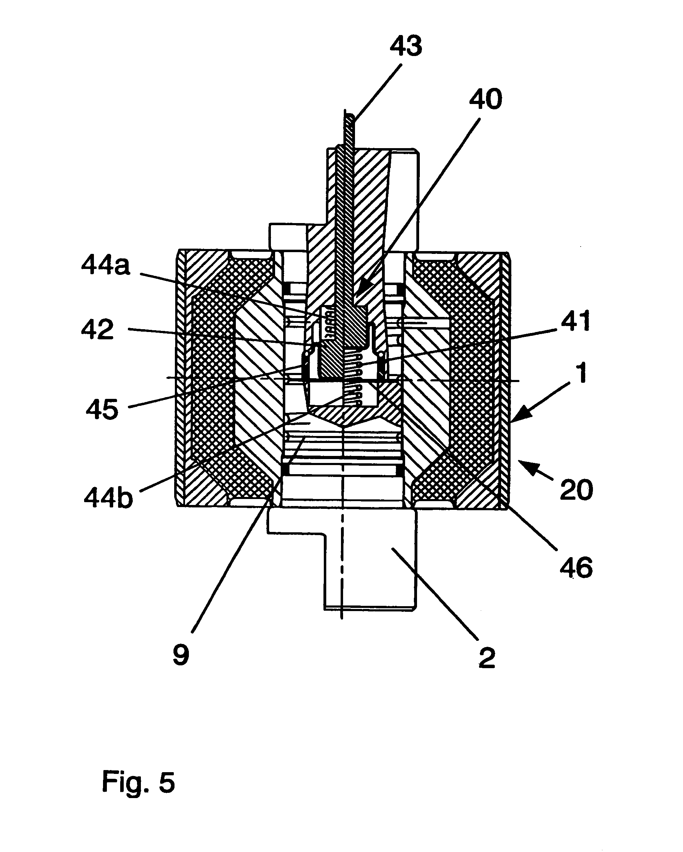

Die in den Fign. 5 bis 7 dargestellten erfindungsgemäßen Achslenkerlager 20 sind gemäß einer bevorzugten Ausführungsform der Erfindung jeweils mit einer Leckageüberwachungs- und -anzeigevorrichtung 40 ausgestattet. Die Leckageüberwachungs- und -anzeigevorrichtung 40 umfasst gemäß einer bevorzugten Ausführungsform der Erfindung nach Art eines hydraulischen Zylinders eine hydraulische Kammer 41 und einen in der Kammer angeordneten Kolben 42, der mit einem Anzeigestössel 43 verbunden ist. Insbesondere ist die Leckageüberwachungs- und -anzeigevorrichtung 40 in den Figuren gemäß einer weiteren bevorzugten Ausführungsform der Erfindung in den Lenkerbolzen 2 integriert. Man erkennt, dass bei dieser Ausführungsform kein zusätzlicher Bauraum benötigt wird. Da die Darstellung des Achslenkerlagers in den Figuren 5 bis 7 der in Fig. 1 entspricht, sind zur besseren Übersichtlichkeit mit Ausnahme der Buchse 1, des Lenkerbolzens 2 und des Überlaufkanals 9 nur die Bezugszeichen der Bauteile der die Leckageüberwachungs- und -anzeigeeinrichtung 40 eingetragen.

Die hydraulische Kammer 41 steht bei den dargestellten Ausführungsformen in direktem hydraulischen Kontakt zum Überlaufkanal 9 der Buchse 1. Der Anzeigestössel 43 nimmt im Normalbetrieb die in der jeweils rechten Bildhälfte der Figuren gezeigte definierte Position ein. Ändert sich der Systemdruck in der Buchse, so ändert sich über die hydraulische Verbindung auch der Druck in der der hydraulischen Kammer 41 der Leckageüberwachungs- und-anzeigevorrichtung 40 mit der Folge, dass sich die Position des Anzeigestössels 43 verändert und die in den Figuren in der jeweils linken Bildhälfte dargestellte Endposition einnimmt. Bei den in den Figuren dargestellten Ausführungsformen für die Leckageüberwachungs- und Anzeigevorrichtung 40 ist die hydraulische Anordnung ohne Beschränkung der Allgemeinheit jeweils so ausgelegt, dass der Anzeigestössels 43 im Normalbetrieb über die strinseitige Endfläche des Lenkerbolzens 2 hinausragt und im Falle einer Leckage in den Lenkerbolzen 2 hineingezogen wird. Diese Auslegung hat fertigungstechnische Vorteile, der Aufbau der Leckageüberwachungs- und -anzeigevorrichtung ist einfacher zu realisieren. Es liegt jedoch auf der Hand, dass auch die umgekehrte Variante, d. h. Herausfahren des ansonsten zurückgezogenen Anzeigestössels im Leckagefall, von der vorliegenden Erfindung mit umfasst wird.

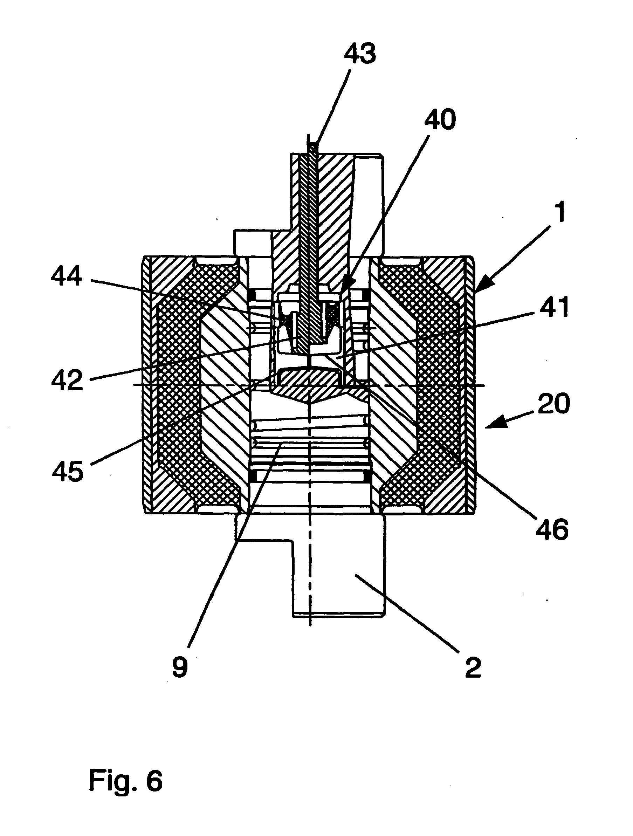

Es gibt verschiedene Möglichkeiten zur Realisierung einer Leckageüberwachungs- und Anzeigevorrichtung mit der oben beschriebenen Funktionsweise. In den Figuren 5 bis 7 sind beispielhaft drei bevorzugte Ausführungsformen dargestellt. Bei den in den Figuren 5 und 6 gezeigten Ausführungsformen sind Federelemente, in Fig. 5 zwei gegeneinander wirkende Schraubenfedern 44a, 44b und in Fig. 6 eine Elastomerfeder 44, zur Einstellung der Normal-Position und des Schwellendrucks zur Positionsänderung des Anzeigestössels vorgesehen. Die Verwendung zweier gegeneinander wirkender Schraubenfedern in Fig. 5 hat den Vorteil dass es leichter ist, ein gewünschtes Steifigkeitsverhalten über die Differenz zweier Federsteifigkeiten zu realisieren, als eine Feder mit der entsprechenden Steifigkeitscharakteristik aufzufinden. Man erkennt in Fig. 6 in der rechten Bildhälfte, dass die Elastomerfeder 44 im Normalbetrieb durch den Innendruck in der Kammer 41 vorgespannt ist. Fällt der Innendruck unter den erwähnten Schwellenwert entspannt sich sie Elastomerfeder 44 und nimmt die in der linken Bildhälfte dargestellte Position ein. Dabei zieht sie den Kolben 42 mit dem Anzeigestössel 43 nach innen. Mit den Bezugszeichen 45 und 46 sind in den Figuren eine Abdichtmembran bzw. der Verbindungskanal zwischen der Kammer 41 und dem Kanal 9 bzw. den Kammern 7a, 7b bezeichnet.

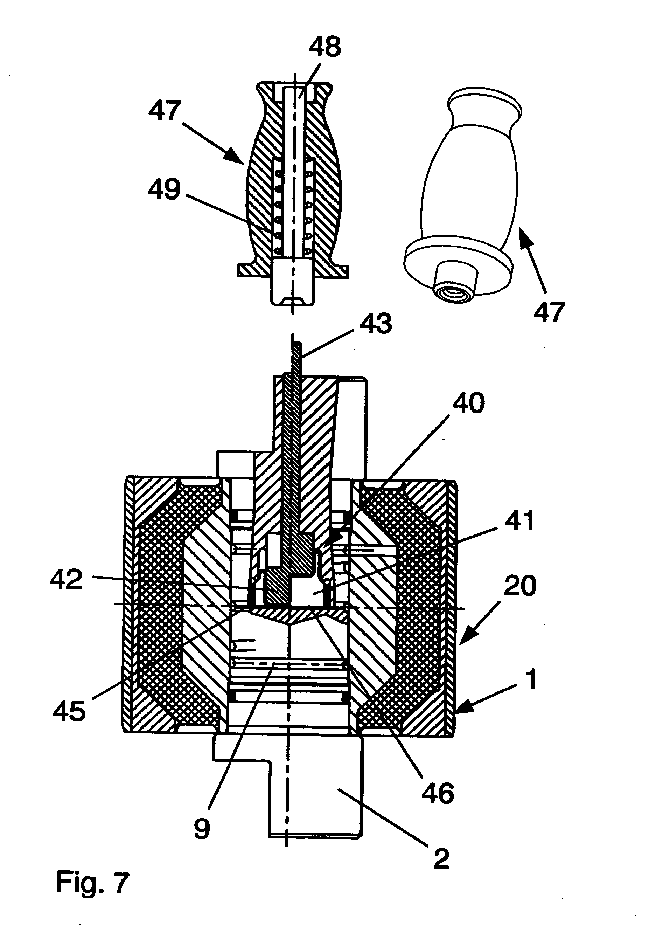

Bei der in Fig. 7 dargestellten Variante wird auf Federelemente völlig verzichtet, der Anzeigstössel 43 folgt der Bewegung der Membran 45. Weiterhin ist in Fig. 7 ein Griffstück 47 mit einem Anzeigstössel 48 zu sehen. Der Anzeigstössel 48 ist gegen die Kraft einer Feder 49, die einen definierten Gegendruck erzeugt, aus dem Griffstück 47 herausfahrbar. Wird das Griffstück nun mit seinem Anzeigstössel 49 auf einen Anzeigestössel 43 der Leckageüberwachungs- und Anzeigevorrichtungen der Figuren 5 bis 7 aufgesetzt, so wird der Anzeigestössel 48 durch den durch den Anzeigestössel 43 erzeugten Gegendruck gegen die definierte Federkraft aus dem Griffstück 47 herausbewegt. Die Höhe des aus dem Griffstück 47 herausragenden Anzeigestössels 49 ist somit ein Maß für den auf den Anzeigestössel 43 wirkenden Innendrucks in der Kammer 41. Das Griffstück 47 erlaubt somit zusätzlich zur rein qualitativen Anzeige einer Druckänderung durch eine Positionsänderung des Anzeigestössels 43 bei den Leckageüberwachungsund Anzeigevorrichtungen aus den Figuren 5 bis 7 noch eine quantitative Bestimmung des aktuellerweise vorliegenden Innendrucks. Dies erlaubt ein frühzeitiges Erkennen einer beginnenden Leckage.

## Patentansprüche

1. Achslenkerlager als Bauteil eines Laufwerks für Schienenfahrzeuge, umfassend einen Lenkerbolzen und wenigstens ein Federelement, das zwischen dem Lenkerbolzen und dem Lenkerauge des Achslenkers angeordnet ist, wobei das Federelement eine hydraulische Buchse (1) umfasst, die ein äußeres (3, 3a) und ein inneres (4) Gehäuse aufweist, welche einander in radialem Abstand umschließen, um einen Ringspalt (5) zu bilden, wobei in dem Ringspalt (5) ein gummielastisches Element (6) vorgesehen ist, welches wenigstens zwei diametral einander gegenüberliegende Kammern (7a, 7b) zumindest teilweise begrenzt, die mit einem hydraulischen Fluid gefüllt sind und über einen Überlaufkanal (9) miteinander verbunden sind, **dadurch gekennzeichnet, dass** der Überlaufkanal (9) als passiver Schwingungstilger ohne externe Steuerung des Fluidstroms ausgebildet ist.

2. Achslenkerlager nach Anspruch 1, **dadurch gekennzeichnet, dass** der Überlaufkanal (9) spiral-, wendel- oder mäanderförmig ausgebildet ist.

3. Achslenkerlager nach einem der Ansprüche 1 oder 2, **dadurch gekennzeichnet, dass** der Überlaufkanal (9) am Aussen- und/oder Innenumfang der Buchse (1) geführt ist.

4. Achslenkerlager nach einem der Ansprüche 1 bis 3, **dadurch gekennzeichnet, dass** der Überlaufkanal (9) durch die Innenwandung des inneren Gehäuseteils (4) und eine wendelförmige Nut im Aussenumfang des von der Buchse (1) umschlossenen Lenkerbolzens (2) begrenzt wird.

5. Achslenkerlager nach einem der Ansprüche 1 bis 4, **dadurch gekennzeichnet, dass** die hydraulische Buchse (1) eine Leckageüberwachungs- und -anzeigevorrichtung (40) umfasst.

6. Achslenkerlager nach Anspruch 5, **dadurch gekennzeichnet, dass** die Leckageüberwachungs- und -anzeigevorrichtung (40) nach Art eines hydraulischen Zylinders eine hydraulische Kammer (41) mit einem Kolben (42) und einem Anzeigestössel (43) an dem Kolben (42) umfasst, wobei die hydraulische Kammer (41) mit dem Fluidsystem der hydraulischen Buchse (1) in Wirkverbindung steht.

7. Achslenkerlager nach Anspruch 6, **dadurch gekennzeichnet, dass** die hydraulische Kammer (41) mit Kolben (42) und Anzeigestössel (43) in den Lenkerbolzen (2) integriert ist, derart, dass der Anzeigestössel (43) mit seinem äußeren Ende in Abhängigkeit vom Funktionszustand der Buchse (1) in einem definierten Abstand über die stirnseitige Endfläche des Lenkerbolzens (2) hinausragt.

8. Achslenkerlager nach Anspruch 6 oder 7, **dadurch gekennzeichnet, dass** Federelemente (44a, 44b, 44) zur Einstellung der Anzeigeposition und des Schwellendrucks zur Positionsänderung des Anzeigestössels (43) vorgesehen sind.

9. Achslenkerlager nach einem der Ansprüche 7 bis 8, **dadurch gekennzeichnet, dass** Mittel zur quantitativen Bestimmung des auf den Anzeigestössel (43) wirkenden Innedrucks der Kammer (41) vorgesehen sind.

10. Achslenkerlager nach Anspruch 9, **dadurch gekennzeichnet, dass** die Mittel als Griffstück (47) mit einem auf das aus dem stirnseitigen Ende des Lenkerbolzens (2) herausragende Ende des Anzeigestössels (43) aufsetzbaren und durch dieses gegen eine definierte Federkraft aus seiner Normalposition herausfahrbaren Anzeigestössel (48) umfassen.

11. Laufwerk für ein Schienenfahrzeug, **gekennzeichnet durch** ein Achslenkerlager nach einem der Ansprüche 1 bis 10.

## Claims

1. Axle-link bearing as a component part of a running gear for rail vehicles, comprising a link pin and at least one spring element, which is disposed between the link pin and the link eye of the axle link, wherein the spring element comprises a hydraulic bushing (1) having an outer (3, 3a) and an inner (4) housing, which enclose one another at a radial distance apart to form an annular gap (5), in the annular gap (5) there being provided an elastomeric element (6), which at least partially delimits at least two mutually diametrically opposing chambers (7a, 7b) which are filled with a hydraulic fluid and are interconnected by an overflow duct (9), **characterized in that** the overflow duct (9) is configured as a passive vibration absorber without external control of the fluid stream.

2. Axle-link bearing according to Claim 1, **characterized in that** the overflow duct (9) is of spiralled, helical or winding configuration.

3. Axle-link bearing according to one of Claims 1 or 2, **characterized in that** the overflow duct (9) is guided on the outer and/or inner periphery of the bushing (1).

4. Axle-link bearing according to one of Claims 1 to 3, **characterized in that** the overflow duct (9) is delimited by the inner wall of the inner housing part (4) and a helical groove in the outer periphery of the link pin (2) enclosed by the bushing (1).

5. Axle-link bearing according to one of Claims 1 to 4, **characterized in that** the hydraulic bushing (1) comprises a leak monitoring and indicating device (40).

6. Axle-link bearing according to Claim 5, **characterized in that** the leak monitoring and indicating device (40) comprises, in the style of a hydraulic cylinder, a hydraulic chamber (41) having a piston (42) and an indicator plunger (43) on the piston (42), the hydraulic chamber (41) being operatively connected to the fluid system of the hydraulic bushing (1).

7. Axle-link bearing according to Claim 6, **characterized in that** the hydraulic chamber (41) with piston (42) and indicator plunger (43) is integrated in the link pin (2) such that the indicator plunger (43) projects with its outer end, in dependence on the working state of the bushing (1), at a defined distance over the frontal end face of the link pin (2).

8. Axle-link bearing according to Claim 6 or 7, **characterized in that** spring elements (44a, 44b, 44) are provided for adjusting the indicator position and the threshold pressure for changing the position of the indicator plunger (43).

9. Axle-link bearing according to one of Claims 7 to 8, **characterized in that** means are provided for quantitatively determining the internal pressure, acting upon the indicator plunger (43), of the chamber (41).

10. Axle-link bearing according to Claim 9, **characterized in that** the means comprise a grip (47) having an indicator plunger (48) which can be mounted onto that end of the indicator plunger (43) that projects out of the frontal end of the link pin (2) and can be transported by this end out of its normal position counter to a defined spring force.

11. Running gear for a rail vehicle, **characterized by** an axle-link bearing according to one of Claims 1 to 10.

## Revendications

1. Palier pour guide d'essieu faisant partie d'un mécanisme de roulement pour véhicules ferroviaires, comprenant un boulon de guide d'essieu et au moins un élément de ressort, qui est disposé entre le boulon de guide d'essieu et l'oeillet de guide d'essieu, l'élément de ressort comprenant une douille hydraulique (1) qui présente un boîtier extérieur (3, 3a) et un boîtier intérieur (4), qui s'entourent mutuellement à distance radiale, afin de former une fente annulaire (5), un élément en caoutchouc élastomère (6) étant prévu dans la fente annulaire (5), lequel limite au moins en partie au moins deux chambres (7a, 7b) diamétralement opposées qui sont remplies d'un fluide hydraulique et sont connectées l'une à l'autre par le biais d'un canal de débordement (9), **caractérisé en ce que** le canal de débordement (9) est réalisé sous la forme d'un amortisseur d'oscillations sans commande externe du courant de fluide.

2. Palier pour guide d'essieu selon la revendication 1, **caractérisé en ce que** le canal de débordement (9) est réalisé en forme de spirale, d'hélice ou de méandre.

3. Palier pour guide d'essieu selon la revendication 1 ou 2, **caractérisé en ce que** le canal de débordement (9) est guidé sur la périphérie extérieure et/ou intérieure de la douille (1).

4. Palier pour guide d'essieu selon l'une quelconque des revendications 1 à 3, **caractérisé en ce que** le canal de débordement (9) est limité par la paroi interne de la partie interne (4) du boîtier et par une rainure hélicoïdale dans la périphérie extérieure du boulon de guide d'essieu (2) entouré par la douille (1).

5. Palier pour guide d'essieu selon l'une quelconque des revendications 1 à 4, **caractérisé en ce que** la douille hydraulique (1) comprend un dispositif de surveillance et d'indication des fuites (40).

6. Palier pour guide d'essieu selon la revendication 5, **caractérisé en ce que** le dispositif de surveillance et d'indication des fuites (40) comprend, à la manière d'un cylindre hydraulique, une chambre hydraulique (41) avec un piston (42) et un poussoir d'indication (43) sur le piston (42), la chambre hydraulique (41) étant en liaison fonctionnelle avec le système fluidique de la douille hydraulique (1).

7. Palier pour guide d'essieu selon la revendication 6, **caractérisé en ce que** la chambre hydraulique (41) avec le piston (42) et le poussoir d'indication (43) est intégrée dans le boulon de guide d'essieu (2) de telle sorte que le poussoir d'indication (43) sorte avec son extrémité extérieure en fonction de l'état fonctionnel de la douille (1) à une distance définie au-delà de la surface d'extrémité frontale du boulon de guide d'essieu (2).

8. Palier pour guide d'essieu selon la revendication 6 ou 7, **caractérisé en ce que** des éléments de ressort (44a, 44b, 44) pour l'ajustement de la position d'indication et de la pression seuil sont prévus pour faire varier la position du poussoir d'indication (43).

9. Palier pour guide d'essieu selon l'une quelconque des revendications 7 à 8, **caractérisé en ce que** des moyens sont prévus pour la détermination quantitative de la pression interne de la chambre (41) agissant sur le poussoir d'indication (43).

10. Palier pour guide d'essieu selon la revendication 9, **caractérisé en ce que** les moyens comprennent une pièce de préhension (47) avec un poussoir d'indication (48) pouvant être posé sur l'extrémité du poussoir d'indication (43) sortant depuis l'extrémité frontale du boulon de guide d'essieu (2) et pouvant être ressorti à travers celui-ci hors de sa position normale, à l'encontre d'une force de ressort définie.

11. Mécanisme de roulement pour un véhicule ferroviaire, **caractérisé par** un palier pour guide d'essieu selon l'une quelconque des revendications 1 à 10.
